# EUROPÄISCHE PATENTANMELDUNG

(11) **EP 4 620 553 A1**
(43) Veröffentlichungstag der Anmeldung: **24.09.2025**
(21) Anmeldenummer: 25160673.7
(22) Anmeldetag: 27.02.2025
(51) Int. Cl.: B01D 33/06, B01D 33/52, B01D 33/58, D06F 39/10, B01D 36/02, B01D 35/02

(54) **VERFAHREN ZUM BETRIEB EINES WASSERFÜHRENDEN HAUSHALTSGERÄTES MIT EINER PRIMÄREN UND EINER SEKUNDÄREN FILTERVORRICHTUNG UND HIERFÜR GEEIGNETES WASSERFÜHRENDES HAUSHALTSGERÄT**

(30) Priorität: 20.03.2024 DE 102024202633
(71) Anmelder: BSH Hausgeräte GmbH, 81739 München (DE)
(72) Erfinder: Baumgarten, Sven, 12349 Berlin (DE); Römer, Raymond, 10965 Berlin (DE); Beckmann, Tyl, 10777 Berlin (DE); Detre, Soma, 12047 Berlin (DE)

(57) **Zusammenfassung**

Die Erfindung betrifft ein Verfahren zum Betrieb eines wasserführenden Haushaltsgeräts 1, aufweisend eine in einem Abflusskanal 23 des Haushaltsgerätes 1 angeordnete primäre Filtervorrichtung 22 mit einem rotierbaren Filterelement 24 zur Abscheidung einer Mikroplastik-Partikel enthaltenden Masse 25 von einer wässrigen Flüssigkeit 7, eine in Fließrichtung vor der primären Filtervorrichtung 22 angeordnete Abpumpe 18 sowie eine sekundäre Filtervorrichtung 4, die mit der primären Filtervorrichtung 22 über eine Förderleitung 26 fluidisch verbindbar ist, wobei in einer Spülphase der primären Filtervorrichtung 22 das rotierbare Filterelement 24 derart rotiert wird, dass in der wässrigen Flüssigkeit 7 eine Strömung in Richtung der sekundären Filtervorrichtung 4 erzeugt wird. Die Erfindung betrifft außerdem ein zur Durchführung dieses Verfahrens geeignetes wasserführendes Haushaltsgerät.

## Beschreibung

Die Erfindung betrifft ein Verfahren zum Betrieb eines wasserführenden Haushaltsgerätes mit einer primären und einer sekundären Filtervorrichtung sowie ein hierfür geeignetes wasserführendes Haushaltsgerät.

Die Problematik von Mikroplastik ist von großer Bedeutung, da die Verbreitung von Mikroplastik selbst in entfernten Ozeanregionen und Meeresbewohnern festgestellt wurde. Mikroplastik kann auf verschiedenen Wegen erzeugt bzw. verbreitet werden, beispielsweise beim Reifenabrieb, durch die Verwendung in Reinigungsmitteln und Kosmetika, aber auch bei der Behandlung von Wäschestücken. So werden auch in Wäschebehandlungsgeräten wie Waschmaschinen, Waschtrocknern und Trocknern aus den darin behandelten Wäschestücken kleine Partikel abgesondert, insbesondere Flusen und andere Kunststoffpartikel.

Die Entwicklung und Integration eines technischen Systems zur Reinigung des Abwassers von Mikroplastik-Partikeln in Waschgeräten ist daher von großer Bedeutung. Das Abwasser oder die Abluft von Wäschebehandlungsgeräten sollte von Mikroplastik-Partikeln gereinigt werden können, was beispielsweise vorzugsweise über mehrere Waschzyklen hinweg ohne Eingreifen des Kunden funktionieren sollte. Es wird an Rückhaltesystemen von Mikroplastikemissionen gearbeitet.

In der Filtervorrichtung eines wasserführenden Haushaltsgerätes, hierin eine primäre Filtervorrichtung, wird Abwasser aus dem wasserführenden Haushaltsgerät, insbesondere einer Waschmaschine oder einem Waschtrockner, vor dem Verlassen des Gerätes gefiltert. Mikroplastik und alle anderen Stoffe wie Flusen oder Kleinteile, die ein Benutzer in seinen Wäschestücken mitgewaschen hat, werden dort nach dem Waschprozess im sogenannten Abpumpprozess oder Entwässerungsprozess ausgefiltert, indem sie an einer im Allgemeinen fein gelochten Filteroberfläche zurückgehalten werden.

Aufgabe der vorliegenden Erfindung war es vor diesem Hintergrund, ein Verfahren zum Betrieb eines wasserführenden Haushaltsgerätes, aufweisend eine in einem Abflusskanal des Haushaltsgerätes angeordnete primäre Filtervorrichtung, eine in Fließrichtung vor der primären Filtervorrichtung angeordnete Abpumpe sowie eine sekundäre Filtervorrichtung, die mit der primären Filtervorrichtung fluidisch verbindbar ist, bereitzustellen, mit dem in einem Behandlungsverfahren im wasserführenden Haushaltsgerät anfallende Kleinteile auf effiziente und sichere Weise von der primären zur sekundären Filtervorrichtung transportiert werden können. Aufgabe der Erfindung war auch die Bereitstellung eines zur Durchführung dieses Verfahrens geeigneten wasserführenden Haushaltsgerätes.

Die Lösung dieser Aufgabe wird nach dieser Erfindung erreicht durch ein Verfahren zum Betrieb eines wasserführenden Haushaltsgeräts sowie ein zur Durchführung dieses Verfahrens geeignetes wasserführendes Haushaltsgerät mit den Merkmalen der jeweiligen unabhängigen Patentansprüche. Bevorzugte Ausführungsformen des erfindungsgemäßen Verfahrens sowie des erfindungsgemäßen wasserführenden Haushaltsgerätes sind in den abhängigen Patentansprüchen aufgeführt, wobei bevorzugten Ausführungsformen des erfindungsgemäßen Verfahrens bevorzugten Ausführungsformen des erfindungsgemäßen Haushaltsgerätes entsprechen, selbst wenn dies hierin nicht explizit erwähnt wird.

Gegenstand der Erfindung ist daher ein Verfahren zum Betrieb eines wasserführenden Haushaltsgerätes, aufweisend eine in einem Abflusskanal des Haushaltsgerätes angeordnete primäre Filtervorrichtung mit einem rotierbaren Filterelement zur Abscheidung einer Mikroplastik-Partikel enthaltenden Masse von einer wässrigen Flüssigkeit, eine in Fließrichtung vor der primären Filtervorrichtung angeordnete Abpumpe sowie eine sekundäre Filtervorrichtung, die mit der ersten Filtervorrichtung über eine Förderleitung fluidisch verbindbar ist, wobei in einer Spülphase der primären Filtervorrichtung das rotierbare Filterelement derart rotiert wird, dass in der wässrigen Flüssigkeit eine Strömung in Richtung der sekundären Filtervorrichtung erzeugt wird.

"Fluidisch verbindbar" bedeutet dabei, dass die Förderleitung gegebenenfalls auch durch eine Schließvorrichtung, z.B. ein Ventil, für einen vorgegebenen Zeitraum verschlossen werden kann.

Erfindungsgemäß werden aufgrund der Rotation des rotierbaren Filterelementes, welches durch einen sogenannten Filtermotor, auch Antriebsmotor genannt, antreibbar ist, alle an der zylindrischen Mantelfläche des Filterelementes ausgefilterten Stoffe, insbesondere auch vor dem Filterelement befindliche Kleinteile, zur sekundären Filtervorrichtung gespült.

Das gesamte Mikroplastikfilter (MPF) - System lässt konstruktionsbedingt durch die notwendigen System-Spalte zwischen beweglichen und stehenden Teilen nur eine gewisse geometrische Abmessung von Teilchen (Partikel und größere Teile) zu. Größere Teile können falls erforderlich ggf. durch einen separaten Großteilefilter ausgefiltert werden. Dies sowie das Ausfiltern von ggf. Kleinteilen muss jedenfalls vor dem MPF-System in Fließrichtung vor der Laugen-Entleerungspumpe, hierin insbesondere als Abpumpe bezeichnet, geschehen.

Jedenfalls müssen erfindungsgemäß diese Kleinteile und ggf. größere Teile ausgefiltert werden. Alle Kleinteile, die einen ggf. vorhandenen Großteilefilter passieren können, müssen vom MPF-System dann prozesssicher in die sekundäre Filtervorrichtung gefördert werden können, ohne beim Prozess der Regeneration des primären Filtersystems oder beim Transport zur sekundären Filtervorrichtung Filterblockaden oder Verblockungen des Strömungsquerschnitts zu verursachen. Kleinteile im Sinne dieser Erfindung sind insbesondere Teile mit einer Abmessung im Bereich von 1 mm bis zu mehreren Zentimetern, insbesondere im Bereich von 1 mm bis 3 cm. Beispiele hierfür sind Münzen, Haarklammern, Büroklammern, Knöpfe.

Erfindungsgemäß ganz besonders bevorzugt ist das Filterelement ein zylindrisches Filterelement und ist die primäre Filtervorrichtung eingerichtet, um das zylindrische Filterelement derart zu rotieren, dass die auf dem Filterelement abgeschiedene Mikroplastik-Partikel enthaltende Masse abgeschleudert und zusammen mit ggf. vor dem Filterelement angesammelten Kleinteilen aufgrund einer geeignet erzeugten, ausreichend hohen Strömung durch die Förderleitung in die sekundäre Filtervorrichtung befördert wird. Größere Teile können vorab in einer optional eingesetzten Großteilefalle aufgefangen werden.

Das rotierbare Filterelement hat daher vorzugsweise eine zylindrische Mantelfläche. Beispielsweise kann im zylindrischen Filterelement eine zylindrische Filterfläche einen zylindrischen Filterinnenraum umgeben und eine zu filtrierende wässrige Flüssigkeit radial in den zylindrischen Filterinnenraum strömen und diesen in einer axialen Richtung wieder verlassen.

Es gibt im Allgemeinen einen Antriebsmotor für das rotierbare Filterelement, der für den Rückspülvorgang der primären Filtervorrichtung verwendet wird. Durch Rotation des Filterelementes fließt die wässrige Flüssigkeit während dieses Rückspülprozesses von innen nach außen durch die Filteroberfläche, d.h. die Oberfläche des Filterelementes.

Ein vorzugsweise am rotierbaren Filterelement der primären Filtervorrichtung angeordnetes Pumpenrad sorgt für eine Förderung der rückgespülten, mit Flusen und Mikroplastik versetzten wässrigen Flüssigkeit zur sekundären Filtervorrichtung.

Beim eingesetzten Filterelement, z.B. einem zylindrischen Filterelement, ist es erfindungsgemäß bevorzugt, dass es eine Maschenweite im Bereich von 10 bis 300 µm hat, vorzugsweise im Bereich von 30 bis 70 µm und ganz besonders bevorzugt im Bereich von 40 bis 60 µm, beispielsweise 50 µm.

Erfindungsgemäß ist es im Allgemeinen nicht erforderlich, die primäre Filtervorrichtung auszutauschen. Stattdessen wird ein Benutzer des wasserführenden Haushaltsgerätes im Allgemeinen die sekundäre Filtervorrichtung direkt reinigen oder austauschen. Die Reinigung der sekundären Filtervorrichtung wird von seiner Ausgestaltung abhängig sein.

In einer Ausführungsform muss ein Filterelement der sekundären Filtervorrichtung regelmäßig ausgetauscht werden, um die sichere Regeneration bzw. Funktionsweise der primären Filtervorrichtung sicher zu stellen, damit das Abpumpen der wässrigen Flüssigkeit nicht durch einen zu hohen Druckverlust an der primären Filtervorrichtung gestört oder zu stark beeinflusst wird.

Im Allgemeinen wird die sekundäre Filtervorrichtung so ausgestaltet und positioniert sein, dass sie für einen Benutzer gut zugänglich ist. Vorzugsweise ist daher die sekundäre Filtervorrichtung neben oder in einer Einspülschale angeordnet. Dies kann realisiert werden, wenn das wasserführende Haushaltsgerät eine Waschmaschine oder ein Waschtrockner ist. Dabei ist es wiederum vorteilhaft, dass die Einspülschale mit der sekundären Filtervorrichtung verbunden ist. Die sekundäre Filtervorrichtung muss jedoch nicht unbedingt in der Einspülschale angeordnet sein. Diese Position bietet sich jedoch wegen der guten Zugänglichkeit für einen Benutzer an.

Erfindungsgemäß ist es ganz besonders bevorzugt, wenn die sekundäre Filtervorrichtung hinter der Einspülschale angeordnet ist.

Die Einspülschale dient insbesondere dem Einspülen von Wasch- oder sonstigen Behandlungsmitteln in einen Laugenbehälter eines wasserführenden Haushaltsgerätes, das vorzugsweise als Wäschebehandlungsgerät ausgestaltet ist. Wenn dies der Fall ist, ist die Einspülschale vorzugsweise mit der sekundären Filtervorrichtung verbunden. Dabei können Einspülschale und sekundäre Filtervorrichtung ein einstückiges Bauteil bilden, das beispielsweise durch Spritzguss hergestellt werden kann. Alternativ können aber Einspülschale und sekundäre Filtervorrichtung auch lösbar, z.B. durch Einrasten, miteinander verbunden sein. Es ist bei einer Waschmaschine oder einem Waschtrockner überdies erfindungsgemäß bevorzugt, dass die sekundäre Filtervorrichtung hinter der Einspülschale angeordnet ist. Dies bedeutet, dass ein Benutzer des wasserführenden Haushaltsgerätes zunächst die Einspülschale herausziehen kann. Sind Einspülschale und Sekundärfiltervorrichtung verbunden, so können beide gemeinsam herausgezogen werden.

Die Förderleitung zwischen der primären Filtervorrichtung und der sekundären Filtervorrichtung kann verschieden ausgestaltet sein. Im Allgemeinen wird als Förderleitung ein Schlauch verwendet.

Die Fähigkeit, Kleinteile durch einen gegebenen Querschnitt der Förderleitung bzw. des Schlauches von der primären zur sekundären Filtervorrichtung zu fördern, hängt von im Wesentlichen drei Faktoren ab:
a) Masse der Kleinteile, die in Abhängigkeit von deren Volumen die statische Auftriebskraft im Wasser als positiv oder negativ beschreibt, also deren Dichte,
b) genaue geometrische Abmessungen der Kleinteile, insbesondere deren schmalste Seite, die die geringste Angriffsfläche für die Strömung zum Weitertransport in Richtung der sekundären Filtervorrichtung hinsichtlich der dynamischen Auftriebskraft bietet,
c) Strömungsgeschwindigkeit, auch hinsichtlich der Festlegung der dynamischen Auftriebskraft im Verhältnis oder als Differenz zur Absink-Geschwindigkeit im Wasser,
d) Ausrichtung der Förderleitung im Raum, denn da die Schwerkraft sich auch eine Rolle spielt, wäre der ungünstigste Fall, wenn Partikel von unten nach oben transportiert werden müssen.

Beim erfindungsgemäßen Verfahren wird die Strömungsgeschwindigkeit der wässrigen Flüssigkeit zwischen der primären und der sekundären Filtervorrichtung zumindest kurzzeitig erhöht, beispielsweise um mindestens 10 % gegenüber der Situation, in der durch alleinige Rotation der primären Filtervorrichtung deren Rückspülung erfolgt.

Das erfindungsgemäße Verfahren kann auf unterschiedliche Weise durchgeführt werden. So kann das erfindungsgemäße Verfahren beispielsweise als Reinigungssequenz während der Durchführung eines Waschprogrammes durchgeführt werden. Allerdings kann das erfindungsgemäße Verfahren auch als separates Reinigungsprogramm durchgeführt werden.

In einer bevorzugten Ausführungsform wird das erfindungsgemäße Verfahren nach einer Reinigung bzw. einem Wechsel der sekundären Filtervorrichtung durchgeführt. Ein neuer Filter ohne Belegung mit Flusen stellt einen wesentlich geringeren hydraulischen Widerstand dar als ein belegter Filter. Dadurch erhöht sich der Förderstrom für die wässrige Flüssigkeit, weil sich ein geringerer Druckverlust über den Filter einstellt. Je kleiner der Druckverlust über die sekundäre Filtervorrichtung, desto größer der Pumpenförderstrom und damit die Strömungsgeschwindigkeit, die maßgeblich für den Transport der Kleinteile verantwortlich ist.

Der Wechsel des Filters kann durch den Benutzer des wasserführenden Haushaltsgeräts vorgenommen und einer Steuereinrichtung des wasserführenden Haushaltsgerätes mitgeteilt werden. Allerdings kann das wasserführende Haushaltsgerät auch sensorbasiert feststellen, dass gerade ein Filterwechsel erfolgt ist und somit nun eine Reinigungssequenz ansteht, ohne dass der Benutzer dieses der Steuereinrichtung mitteilen muss.

Überdies kann der Benutzer durch die Steuereinrichtung an einen erforderlichen Wechsel bzw. eine erforderliche Reinigung der sekundären Filtervorrichtung erinnert werden, so zum Beispiel durch das Zählen oder Erfassen der Anzahl von durchgeführten Waschzyklen oder Regenerationszyklen der primären Filtervorrichtung.

Unabhängig hiervon ist es wünschenswert, dass sich während der Durchführung des erfindungsgemäßen Verfahrens das rotierbare Filterelement vollständig in der wässrigen Flüssigkeit befindet, also ein hoher Wasserstand im wasserführenden Haushaltsgerät realisiert ist, so dass das rotierbare Filterelement lange betrieben werden kann, ohne dass die Strömung abreißt, weil die primäre Filtervorrichtung und ggf. auch die Laugen-Entleerungspumpe zu früh belüftet werden.

Je höher der Wasserstand ist, desto geringer ist überdies die Pumphöhe für den im Allgemeinen vorliegenden Fall, dass die sekundäre Filtervorrichtung höher liegt als die primäre Filtervorrichtung, also die Höhendifferenz vom Wasserstand bis zur sekundären Filtervorrichtung. Der von dem rotierenden Filterelement als Pumpe aufzubringende Differenzdruck ist dann geringer, was den Förderstrom bei konstantem Leistungseintrag erhöht. Könnte man den Wasserstand im Gerät bis zur Höhe der sekundären Filtervorrichtung einstellen, wäre die durch das rotierende Filterelement als Pumpe zu überwindende Förderhöhe gleich Null. Die Pumpe müsste dann nur noch den Druckverlust aufgrund der strömungsbedingten Druckabfälle überwinden.

Überdies kann Wasser durch Einlass-Ventile des Haushaltsgeräts zurr Regeneration der primären Filtervorrichtung bzw. zum Transport von abfiltrierten Partikeln und Kleinteilen zur sekundären Filtervorrichtung zeitgleich eingelassen werden, um den Wasserstand möglichst auf hohem Niveau konstant zu halten, um den Förderstrom zu maximieren.

Die Erzeugung eines hohen Wasserstandes nutzt nach Möglichkeit einen Waschprozess-Zustand, bei dem aufgrund der Waschverfahrenstechnik ohnehin ein hoher Wasserstand im Laugenbehälter einer vorzugsweise verwendeten Waschmaschine vorherrscht, wie es zum Beispiel für Wollprogramme explizit vorgesehen ist.

Beim erfindungsgemäßen Verfahren ist es überdies vorteilhaft, dass ein kurzzeitiges An- und Ausschalten des Primärfiltermotors, also des das rotierbare Filterelement antreibbaren Motors, stattfindet. Ohne dabei einen nennenswerten Förderstrom zur sekundären Filtervorrichtung zu erzeugen, wird in der primären Filtervorrichtung dadurch ständig Wasser bewegt, das die Belegung des Filterelementes lösen soll und Kleinteile bereits in Richtung der sekundären Filtervorrichtung befördern soll. Anschließend genügt ein kurzer, kräftiger Impuls bei voller Pumpleistung durch das rotierende Filterelement, um die Kleinteile und sonstigen Partikel zur sekundären Filtervorrichtung zu transportieren. Dadurch wird das benötigte Wasservolumen zum Transport der Kleinteile zur sekundären Filtervorrichtung minimiert und ein sicherer Fremdkörpertransport ermöglicht.

In einer bevorzugten Ausführungsform des erfindungsgemäßen Verfahrens wird zur Rotation der primären Filtervorrichtung zeitweise, aber nicht während des gesamten Betriebes des Antriebsmotors, auch die Abpumpe betrieben. Dies führt zu einer zusätzlichen Druckerhöhung, steigert den Gesamtförderstrom und ermöglicht damit eine Maximierung der Strömungsgeschwindigkeit für den Transport der Kleinteile. Ein Teil des Volumenstroms der Abpumpe wird dabei ggf. weiterhin über den Abflussschlauch aus dem Haushaltsgerät in das Abwassersystem gepumpt werden, auch wenn dies erfindungsgemäß nicht bevorzugt ist. Jedoch wird ein Teilvolumenstrom von der primären zur sekundären Filtervorrichtung gelangen und damit die Pumpwirkung der primären Filtervorrichtung erhöhen. Der Pumpenförderstrom der Abpumpe, die an sich das Wasser aus dem Gerät fördern soll, wird insbesondere auch als Abpumpförderstrom bezeichnet, während der in der primären Filtervorrichtung erzeugte Flüssigkeitsstrom auch als Primärfilterförderstrom bezeichnet wird.

Die genaue Aufteilung der Volumenstromanteile in denjenigen Teilvolumenstrom, der das Gerät durch den Abflussschlauch verlässt, und denjenigen Teil, der von der primären zur sekundären Filtervorrichtung fließt, wird sich entsprechend der hydraulischen Widerstände der beiden Wege einstellen.

Das Ziel aller Maßnahmen ist es, den Förderstrom von der primären Filtervorrichtung zur sekundären Filtervorrichtung möglichst lange möglichst hoch zu halten, um den sicheren Transport der Fremdkörper, insbesondere der Kleinteile, zur sekundären Filtervorrichtung zu gewährleisten. Dadurch können auch Fremdkörper mit hoher Dichte und im Verhältnis dazu geringer Oberfläche mit einer höheren Wahrscheinlichkeit bis zur sekundären Filtervorrichtung transportiert werden.

Darüber hinaus kann ein Benutzer des wasserführenden Haushaltsgerätes ggf. durch Einsetzen besonderer, für die Reinigung optimierter Filter in der sekundären Filtervorrichtung, die einen deutlich reduzierten Druckverlust aufweisen und dafür mit einer größeren Filterdurchtrittsfläche und/oder einer größeren Filter-Maschenweite ausgestattet sind, mitwirken.

In einer bevorzugten Ausführungsform des erfindungsgemäßen Verfahrens wird die sekundäre Filtervorrichtung daher so ausgestaltet, dass sie einen Sekundärfilter mit einem besonders geringen hydraulischen Widerstand aufweist, so dass im Allgemeinen Mikroplastik durchgelassen wird und im Haushaltsgerät zirkuliert werden kann. Ein derartiger Sekundärfilter wird hierin auch als spezieller Sekundärfilter bezeichnet.

Dies wird insbesondere durch Verwendung eines Gitters oder eines Filtersackes mit einer entsprechend großen Maschenweite und/oder mit einem besonders großes Filterflächendurchtrittsverhältnis erreicht. Große Maschenweite resultiert in einem geringen hydraulischen Gegendruck, so dass Kleinteile leichter von der primären Filtervorrichtung zur sekundären Filtervorrichtung gepumpt werden können. Hauptaufgabe ist das Auffangen von Kleinteilen während eines speziellen Reinigungsprogramms. Bei dieser Ausführungsform können Kleinteile relativ rasch zur sekundären Filtervorrichtung befördert werden, wo sie durch einen Benutzer des wasserführenden Haushaltsgerätes entnommen werden können.

Diese Maschenweite ist größer als die Größe der Mikroplastikpartikel, die zurückgehalten werden sollen. Die nun nicht mehr abgefilterten Mikroplastikpartikel verbleiben bei dieser Ausführungsform aber im wasserführenden Haushaltsgerät und können nicht in das Abwasser gelangen, da sie quasi nur im Haushaltsgerät im Kreis gefördert werden, also nur zirkulieren und das Haushaltsgerät nicht verlassen.

Anstelle eines speziellen Filtersacks mit großer Maschenweite kann bei Verwendung einer Einspülschale die Einspülschale an sich oder ein zusätzliches Bauteil ein entsprechend grobmaschiges Gitter aufweisen. Mit diesem zusätzlichen Gitter kann die Gitterstruktur weiter verkleinert werden, um sie an die aufzufangenden Kleinteile anzupassen.

In diesem Fall kann das erfindungsgemäße Verfahren auch ohne Sekundärfiltersack durchgeführt werden. Die im wasserführenden Haushaltsgerät im Allgemeinen vorhandene Steuervorrichtung kann dann ausgestaltet sein, um die Durchführung des erfindungsgemäßen Verfahrens auch ohne Sekundärfiltersack zu gestatten. Bei dieser Ausführungsform kann ein Benutzer des Gerätes aufgefangene Kleinteile beispielsweise einer zur sekundären Filtervorrichtung gehörenden Schale in der Nähe oder in der Einspülschale entnommen werden, ohne das ein Sekundärfiltersack geöffnet werden muss.

In einer hierzu alternativen bevorzugten Ausführungsform wird die sekundäre Filtervorrichtung so ausgestaltet, dass sie einen öffenbaren Sekundärfiltersack aufweist, der sich von einem Benutzer des Haushaltsgerätes öffnen lässt, so dass Fremdkörper wie insbesondere Kleinteile entnommen werden können, ggf. durch Auswaschen des Sekundärfiltersacks. Damit kann der spezielle Filtersack immer wieder gereinigt und wiederverwendet werden. Dies geht am besten, wenn ein Benutzer des Haushaltsgerätes den Filtersack öffnen kann und ihn unter dem Wasserhahn ausspülen darf. Die Maschenweite muss hierbei ebenfalls so groß gewählt werden, dass Mikroplastikpartikel nicht vom Sekundärfiltersack zurückgehalten werden, damit dieser den Förderstrom der wässrigen Flüssigkeit nicht bei minimaler Filteroberflächen-Belegung durch Fremdkörper reduziert und damit beim Ausspülen unter dem Wasserhahn keine Mikroplastikpartikel in das Abwassersystem gelangen.

Der Filtersack muss allerdings nicht öffenbar sein. Der Filtersack kann als Teil der sekundären Filtervorrichtung komplett entnommen werden. Das Öffnen der sekundären Filtervorrichtung erfolgt dabei vorzugsweise implizit durch das Herausziehen einer Einspülschale, denn vorzugsweise gehört zumindest deren hinterer Teil der Funktion nach zur sekundären Filtervorrichtung.

Anstelle oder zusätzlich kann beim erfindungsgemäßen Verfahren auch ein Sekundärfiltersack mit kleiner Maschenweite verwendet werden, der neben Kleinteilen auch Mikropartikel auffangen kann, hierin als normaler Sekundärfiltersack bezeichnet. Allerdings kann hierbei ein hydraulischer Gegendruck relativ groß sein, was nachteilig ist, um Kleinteile von der primären zur sekundären Filtervorrichtung zu pumpen. Da ein Benutzer im normalen Betrieb die sekundäre Filtervorrichtung in Abhängigkeit vom Befüllungsgrad mit abtransportieren Filterbelägen insbesondere wechseln muss, werden die Kleinteile somit aus der quasi geschlossenen sekundären Filtervorrichtung entnommen.

Besonders bevorzugt ermöglicht daher das erfindungsgemäße Verfahren eine kombinierte Verwendung von normalem und speziellen Sekundärfiltersack.

Vorzugsweise wird im erfindungsgemäßen Verfahren die eingesetzte sekundäre Filtervorrichtung erkannt und das Verfahren darauf abgestimmt. Der Sekundärfilter kann hierzu entsprechend kodiert sein. Darüber hinaus könnte die Erkennung von normalem und speziellen Sekundärfiltersack durch die Steuereinrichtung des Haushaltsgerätes z.B. anhand der durch einen Drucksensor erfassten Druckverluste über den Filter oder eine Codierung der Filter (z.B. mittels RFID; es sind allerdings auch andere Codiermöglichkeiten wie z.B. Farbe möglich), den Start eines Reinigungsprogramms initiieren. Dabei können wie erwähnt je nach Verwendungszweck unterschiedliche sekundäre Filter bzw. Sekundärfiltersäcke eingesetzt werden. Es kann bei Verwendung z.B. eines RFID-Chips, den die Steuervorrichtung des Haushaltsgerätes ausliest, von einem Benutzer ermittelt werden, welche Art von Filtersack eingesetzt ist.

Überdies kann die Form des Filters, insbesondere die harte Struktur der Einlassöffnung, derart gestaltet sein, dass entsprechende Sensoren im Gerät (taktil, optisch, kapazitiv) diese spezielle Form und damit diesen speziellen Filter erkennen können.

Es können erfindungsgemäß insbesondere verschiedene sekundäre Filtervorrichtungen kombiniert werden. Wie bereits diskutiert, werden bei Verwendung eines Sekundärfilters mit großer Maschenweite Mikropartikel durch den Sekundärfilter gelassen und in der Regel im wasserführenden Haushaltsgerät im Kreislauf geführt. Wird dann ein Sekundärfilter mit ausreichend kleiner Maschenweite eingesetzt, können auch Mikropartikel aufgefangen werden. Ein mit Mikropartikeln gefüllte Filterbeutel kann dann von einem Benutzer entnommen und entsorgt werden.

Gegenstand der Erfindung ist außerdem ein wasserführendes Haushaltsgerät, aufweisend eine Steuereinrichtung, eine in einem Abflusskanal des Haushaltsgerätes angeordnete primäre Filtervorrichtung mit einem rotierbaren Filterelement zur Abscheidung einer Mikroplastik-Partikel enthaltenden Masse von einer wässrigen Flüssigkeit, eine in Fließrichtung vor der primären Filtervorrichtung angeordnete Abpumpe sowie eine sekundäre Filtervorrichtung, die mit der primären Filtervorrichtung über eine Förderleitung fluidisch verbindbar ist, wobei im wasserführenden Haushaltsgerät ein hierin beschriebenes Verfahren durchgeführt werden kann. Insbesondere kann also im erfindungsgemäßen wasserführenden Haushaltsgerät ein Verfahren durchgeführt werden, bei dem in einer Spülphase der primären Filtervorrichtung das rotierbare Filterelement derart rotiert wird, dass in der wässrigen Flüssigkeit eine Strömung in Richtung der sekundären Filtervorrichtung erzeugt wird. Details zum wasserführenden Haushaltsgerät sind daher insbesondere oben bei der Beschreibung des erfindungsgemäßen Verfahrens näher erläutert.

Das wasserführende Haushaltsgerät ist vorzugsweise ausgewählt aus der Gruppe bestehend aus einer Waschmaschine und einem Waschtrockner. Die durch Filtration von Mikroplastik-Partikeln zu befreiende wässrige Flüssigkeit ist dabei im Allgemeinen die in einem Waschprozess von Textilien eingesetzte Waschlauge.

Für den Fall, dass das erfindungsgemäße wasserführende Haushaltsgerät eine Waschmaschine oder ein Waschtrockner ist, verfügt dieses im Allgemeinen auch über eine in einem Laugenbehälter drehbar gelagerte Trommel zur Aufnahme von Wäschestücken sowie eine Wasserzufuhrvorrichtung. Letztere kann beispielsweise ein ventilgesteuerter Frischwasseranschluss sein, wobei das Ventil vorzugsweise durch die Steuerungseinheit steuerbar ist.

Die Erfindung hat zahlreiche Vorteile. Die Erfindung ermöglicht einen Betrieb des wasserführenden Haushaltsgeräts mit einer verbesserten, effizienteren Verwendung der eingesetzten Filtervorrichtungen. Die Erfindung ermöglicht überdies eine Auslegung des Filtermotors, d.h. des Antriebsmotors für das Filterelement, für den optimalen Betriebspunkt im Normalbetrieb, also ein Optimum bzgl. Bauraum, Leistung und Kosten.

Die Grundauslegung der Pumpeneinheit der primären Filtervorrichtung, insbesondere die Motorbaugröße und die Leistungsklasse der elektronischen Motoransteuerung, kann erfindungsgemäß auf der Grundlage der normalen Belastung der primären Filtervorrichtung durch Mikroplastik und Flusen erfolgen. Denn die primäre Filtervorrichtung kann bzgl. Bauraum und Kosten optimiert werden und es muss nicht eine höhere Leistung für den eher selten eintretenden Fall vorgehalten werden, bei dem Kleinteile in die primäre Filtervorrichtung gelangt sind.

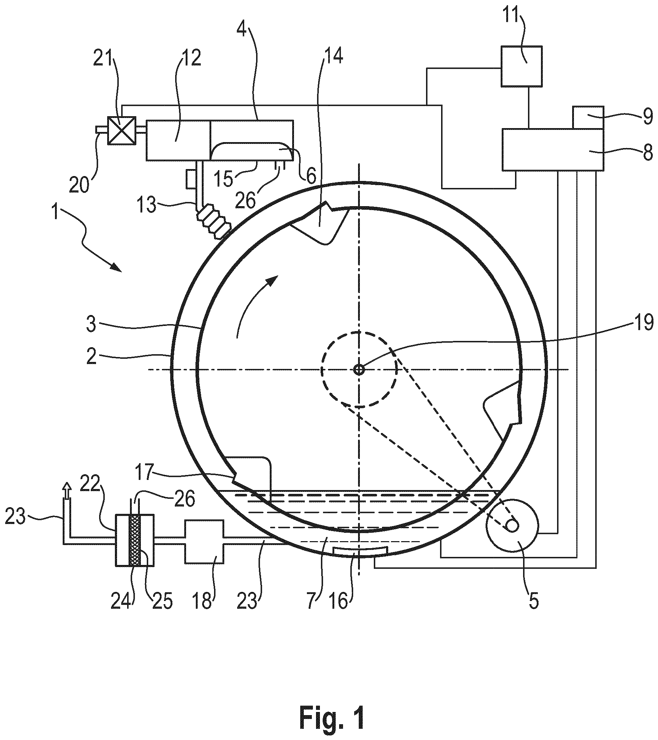

Die Erfindung wird im Folgenden anhand einer nicht einschränkenden Ausführungsform für eine erfindungsgemäß verwendbare zweite Filtervorrichtung sowie ein erfindungsgemäßes wasserführendes Haushaltsgerät, hier eine Waschmaschine, illustriert. Dabei wird Bezug genommen auf die Figuren 1 bis 3.

Fig. 1 zeigt in einer nicht einschränkenden Ausführungsform eine Waschmaschine 1 als Beispiel für ein erfindungsgemäßes wasserführendes Haushaltsgerät. Die Waschmaschine 1 der Fig. 1 weist einen Laugenbehälter 2 auf, in dem eine Trommel 3 drehbar gelagert und durch einen Antriebsmotor 5 antreibbar ist. Mitnehmer 14 und Schöpfeinrichtungen 17 an der Innenfläche des Trommelmantels sorgen für eine verbesserte Durchmischung der wässrigen Flüssigkeit 7 mit hier nicht gezeigten Wäschestücken. Die Waschmaschine 1 weist zudem ein Wasserzulaufsystem auf, das eine Wasseranschlussarmatur für das Hauswassernetz 20, ein elektrisch steuerbares Ventil 21 und eine Zuleitung 13 zum Laugenbehälter 2 umfasst, die gegebenenfalls auch über eine Waschmitteleinspülschale 12 geführt sein kann, aus der das zulaufende Wasser in einem Waschverfahren Waschmittelportionen in den Laugenbehälter 2 transportieren kann. Außerdem befindet sich im Laugenbehälter 2 eine Heizeinrichtung 16. Das Ventil 21 wie auch die Heizeinrichtung 16 können durch eine Steuereinrichtung 8 in Abhängigkeit von einem Programmablaufplan gesteuert werden, der an ein Zeitprogramm und/oder an das Erreichen von gewissen Messwerten von Parametern wie Wasserniveau, Wassertemperatur, Drehzahl der Trommel usw. innerhalb der Waschmaschine 1 gebunden sein kann. 9 bedeutet eine Motor-Trommel-Kontrolleinheit.

Die Waschmaschine 1 weist bei dieser Ausführungsform eine akustische und/oder optische Eingabe- und Anzeigeeinheit 11 auf, mit der beispielsweise und insbesondere ein Ablaufen eines Waschprogrammes angezeigt werden kann.

18 bedeutet eine mit der Steuereinrichtung 8 verbundene Pumpe (Abpumpe) zum Abpumpen der wässrigen Flüssigkeit 7 aus dem Laugenbehälter 2 und ggf. zur zeitweiligen Unterstützung beim erfindungsgemäßen Verfahren. Hierzu ist die Abpumpe 18 im Abflusskanal 23 angeordnet. Im Abflusskanal 23 ist eine primäre Filtervorrichtung 22 mit einem rotierbaren Filterelement 24 zur Abscheidung einer Mikroplastik-Partikel enthaltenden feuchten Masse 25 von einer wässrigen Flüssigkeit 7 aus dem Laugenbehälter 2 angeordnet. Die primäre Filtervorrichtung 22 ist über eine Förderleitung 26 mit der sekundären Filtervorrichtung 4 neben der Einspülschale 12 verbunden. Die sekundäre Filtervorrichtung 4 dient zur Aufnahme der vom Filterelement 24 abgetrennten, Mikroplastik-Partikel enthaltenden feuchten Masse 25 sowie von hier nicht näher gezeigten Kleinteilen. Die zweite Filtervorrichtung 4 enthält zur Aufnahme der Mikroplastik-Partikel enthaltenden feuchten Masse 25 einen wasserdurchlässigen Filterbeutel 6.

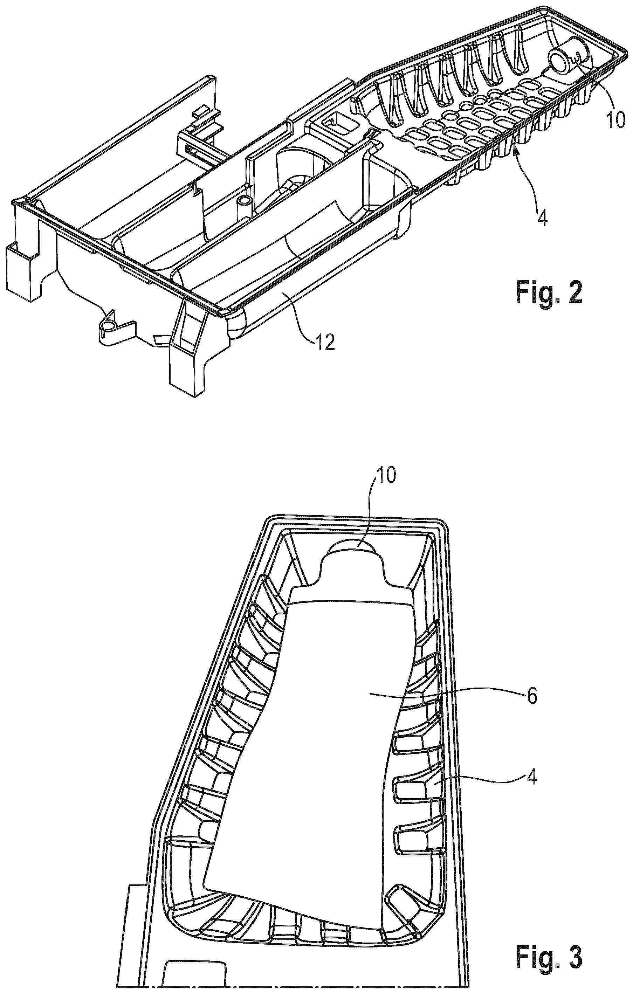

Fig. 2 zeigt in einem offenen, aus dem Wäschebehandlungsgerät von Fig. 1 von einem Benutzer ausgezogenen Zustand eine hier einstückige Anordnung aus einer Einspülschale 12 und einer zweiten Filtervorrichtung 4. Deutlich ist hier der innere Aufbau von Einspülschale 12 und einem unteren Teil der zweiten Filtervorrichtung 4 gezeigt, wobei hier an dem Filterbeuteleinrastteil 10 kein Filterbeutel gezeigt ist.

Fig. 3 zeigt eine sekundäre Filtervorrichtung 4 wie sie in Fig. 2 hinter der Einspülschale angeordnet ist. In der sekundären Filtervorrichtung 4 der Fig. 3 ist an einem Filterbeuteleinrastteil 10 ein Filterbeutel 6 befestigt. Dieser kann hier von einem Benutzer geöffnet werden, um gefilterte Partikel und Kleinteile zu entsorgen. Für Mikroplastikpartikel ist der hier eingesetzte Filterbeutel 6 bei dieser Ausführungsform allerdings aufgrund der relativ hohen Maschenweite durchlässig.

### Bezugszeichenliste

- 1: Wasserführendes Haushaltsgerät; Waschmaschine
- 2: Laugenbehälter
- 3: Trommel
- 4: Sekundäre Filtervorrichtung
- 5: Antriebsmotor für die Trommel
- 6: Filterbeutel
- 7: wässrige Flüssigkeit
- 8: Steuereinrichtung
- 9: Motor-Trommel-Kontrolleinheit
- 10: Filterbeuteleinrastteil
- 11: optische und/oder akustische Eingabe- und Anzeigeeinheit
- 12: (Waschmittel)Einspülschale
- 13: Zuleitung zum Laugenbehälter
- 14: Mitnehmer
- 15: Wasserdurchlässige Bodenwand der zweiten Filtervorrichtung
- 16: Heizvorrichtung
- 17: Schöpfeinrichtung
- 18: Abpumpe
- 19: Drehachse
- 20: Wasserzuleitung, Hauswassernetz, Wasserversorgung
- 21: (elektrisch steuerbares) Ventil
- 22: Primäre Filtervorrichtung
- 23: Abflusskanal
- 24: Filterelement in erster Filtervorrichtung (zur Abfiltration von Mikroplastik-Partikeln)
- 25: Filterbelag; feuchte Mikroplastik-Partikel enthaltende Masse
- 26: Förderleitung für feuchte Mikroplastik-Partikel enthaltende Masse und Kleinteile

## Patentansprüche

1. Verfahren zum Betrieb eines wasserführenden Haushaltsgeräts (1), aufweisend eine in einem Abflusskanal (23) des Haushaltsgerätes (1) angeordnete primäre Filtervorrichtung (22) mit einem rotierbaren Filterelement (24) zur Abscheidung einer Mikroplastik-Partikel enthaltenden Masse (25) von einer wässrigen Flüssigkeit (7), eine in Fließrichtung vor der primären Filtervorrichtung (22) angeordnete Abpumpe (18) sowie eine sekundäre Filtervorrichtung (4), die mit der primären Filtervorrichtung (22) über eine Förderleitung (26) fluidisch verbindbar ist, wobei in einer Spülphase der primären Filtervorrichtung (22) das rotierbare Filterelement (24) derart rotiert wird, dass in der wässrigen Flüssigkeit (7) eine Strömung in Richtung der sekundären Filtervorrichtung (4) erzeugt wird.

2. Verfahren nach Anspruch 1, **dadurch gekennzeichnet, dass** das Filterelement (24) ein zylindrisches Filterelement ist und die primäre Filtervorrichtung (22) eingerichtet ist, um das zylindrische Filterelement (24) derart zu rotieren, dass die auf dem Filterelement (24) abgeschiedene Mikroplastik-Partikel enthaltende Masse (25) abgeschleudert und zusammen mit ggf. vor dem Filterelement (24) angesammelten Kleinteilen aufgrund einer geeignet erzeugten Strömung durch die Förderleitung (26) in die sekundäre Filtervorrichtung (4) befördert wird.

3. Verfahren nach Anspruch 1 oder 2, **dadurch gekennzeichnet, dass** am rotierbaren Filterelement (24) ein Pumpenrad angeordnet ist.

4. Verfahren nach einem der Ansprüche 1 bis 3, **dadurch gekennzeichnet, dass** die sekundäre Filtervorrichtung (4) neben oder in einer Einspülschale (12) angeordnet ist.

5. Verfahren nach Anspruch 4, **dadurch gekennzeichnet, dass** die Einspülschale (12) mit der sekundären Filtervorrichtung (4) verbunden ist.

6. Verfahren nach Anspruch 4 oder 5, **dadurch gekennzeichnet, dass** die zweite Filtervorrichtung (4) hinter der Einspülschale (12) angeordnet ist.

7. Verfahren nach einem der Ansprüche 1 bis 6, **dadurch gekennzeichnet, dass** während des Verfahrens ein Antriebsmotor für das rotierbare Filterelement kurzzeitig an - und ausgeschaltet wird.

8. Verfahren nach einem der Ansprüche 1 bis 7, **dadurch gekennzeichnet, dass** zumindest zeitweise auch die Abpumpe (18) betrieben wird.

9. Verfahren nach einem der Ansprüche 1 bis 8, **dadurch gekennzeichnet, dass** die sekundäre Filtervorrichtung (4) einen Sekundärfilter mit einem geringen hydraulischen Widerstand aufweist, der durchlässig für Mikroplastik ist.

10. Wasserführendes Haushaltsgerät (1) aufweisend eine Steuereinrichtung (8), eine in einem Abflusskanal (23) des Haushaltsgerätes (1) angeordnete primäre Filtervorrichtung (22) mit einem rotierbaren Filterelement (24) zur Abscheidung einer Mikroplastik-Partikel enthaltenden Masse (25) von einer wässrigen Flüssigkeit (7), eine in Fließrichtung vor der primären Filtervorrichtung (22) angeordnete Abpumpe (18) sowie einer sekundären Filtervorrichtung (4), die mit der primären Filtervorrichtung (22) über eine Förderleitung (26) fluidisch verbindbar ist, **dadurch gekennzeichnet, dass** im wasserführenden Haushaltsgerät ein Verfahren nach einem der Ansprüche 1 bis 9 durchgeführt werden kann.
